# EUROPEAN PATENT SPECIFICATION

(11) **EP 0 566 213 B1**
(45) Date of publication and mention of the grant of the patent: **12.03.1997**
(21) Application number: 93201112.5
(22) Date of filing: 15.04.1993
(51) Int. Cl.: B60N 2/46

(54) **Swing-up armrest for motor vehicle seats**
Schwenkbare Armlehne für Kraftfahrzeuge
Appui-bras pirotant pour sièges de véhicules automobiles

(30) Priority: 15.04.1992 IT PD920067
(43) Date of publication of application: 20.10.1993
(73) Proprietor: CLERPREM S.p.A., I-36010 Carre' (Vicenza) (IT)
(72) Inventor: Carussi, Gian Paolo, I-36010 Carre' (Vicenza) (IT)
(74) Representative: Cantaluppi, Stefano

(56) References cited:
- EP-A- 0 466 221
- DE-A- 4 007 525
- DE-A- 4 113 753
- FR-A- 2 127 924
- FR-A- 2 636 278
- US-A- 4 586 748
- US-A- 4 807 935

## Description

This invention relates to a swing-up armrest structure for motor vehicle seats according to the preamble of claim 1. See for instance US-A-4 807 935.

Structures of the above type have been known, wherein the supporting framework embedded in the armrest padding includes a tubular sleeve fitted over a pintle, fast with the framework anchor plate, to pivotally connect the armrest to the seat. The sleeve has, on its axial end facing the plate, a cam formation co-operating with a like formation provided on a collar made fast with the plate to constrain the armrest swinging movement between two limit positions and hold the armrest in said positions, respectively representing a working position with the armrest lying substantially square to the seat backrest, and a home position with the armrest lying parallel to the backrest, on one side of the latter. The cam formations are biased against each other by a spring and associated mounting screw provided on the opposite end of the sleeve to the cam and which can be reached after removing a plug in the armrest.

That structure, while performing as expected, still has some drawbacks.

A first drawback is that the pivotal connection between the pintle and the sleeve can develop with time an objectionable amount of play resulting, inter alia, in the emission of rattling noise from the unavoidable vibrations of a motor vehicle.

Another drawback originates from the complicated construction and processing, and attendant cost, of the various parts that make up the structure, particularly those carrying the cam formations. Also, the armrest must be formed with an assembly opening on the opposite side to the anchor plate, the opening being then closed with said plug, for reaching the spring and its mounting screw. The provision of the spring and the screw on the pintle end opposite to the anchor plate involves, moreover, specific processing and shaping of the framework, especially as relates to a reinforcement of the same, which has to be given an asymmetrical configuration.

Other armrest structures are disclosed in US 4.807.935, FR-A-2.127.924 and DE-A-4007525 which are considered prior art pertinent to the present invention.

The technical problem addressed by this invention is to provide an armrest structure which is designed to obviate the drawbacks with which the aforementioned prior art is beset.

This problem is solved, according to the invention, by an armrest structure as indicated in the appended claims.

The invention will now be further described with reference to four preferred embodiments there of illustrated, by way of example and not of limitation, by the accompanying drawings, in which:
Figure 1 is a cut-away view of a motor vehicle seat incorporating an armrest according to the invention;
Figure 2 is an exploded perspective view of the armrest structure in Figure 1;
Figure 3 is an enlarged perspective view of a detail of Figure 2;
Figure 4 is a perspective view of a first variation of the armrest structure of this invention;
Figure 5 is a longitudinal section view of a second variation of the armrest structure of this invention;
Figure 6 is a perspective detail view, drawn to an enlarged scale, of the variation shown in Figure 5;
Figure 7 is an exploded perspective view of a further variation of the invention;
Figure 8 is a partial perspective view of a detail of Figure 7; and
Figure 9 shows schematically a further detail of the embodiment of the invention shown in Figures 7 and 8.

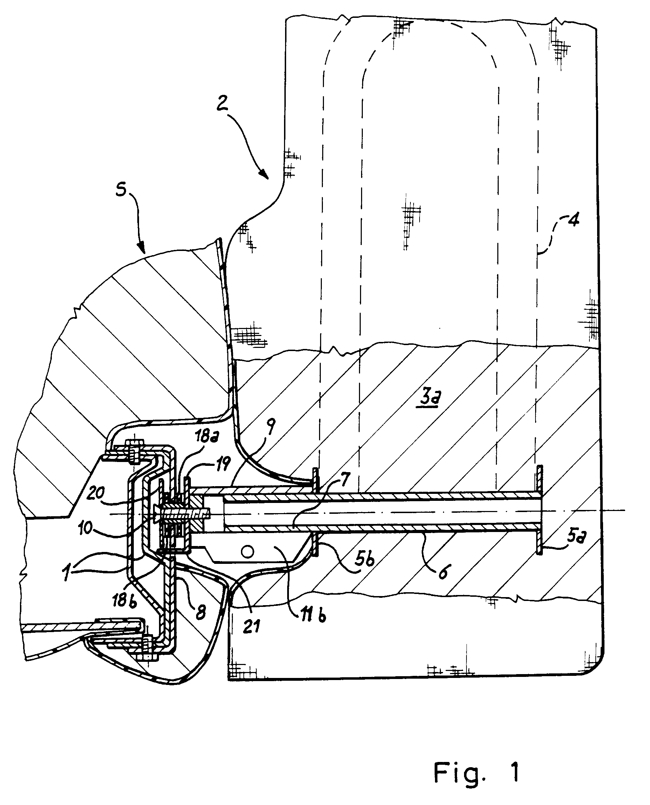

Generally shown at S in Figure 1 is the backrest of a motor vehicle seat having a framework 1 to which an armrest 2 is attached.

The armrest 2 comprises a supporting framework, generally indicated at 3, which is embedded in a padding 3a of foam resin and includes, in turn, a tubular reinforcement 4 having a U-shape with symmetrically parallel legs 4a,b. The reinforcement 4 is attached, as by welding, to a support 5 including two parallel wings 5a,b, close against which there are formed respective cradles for receiving corresponding legs 4a,b. Each wing is formed with a thoroughgoing hole wherethrough a tubular pintle 6, having preferably a polygonal cross-sectional shape and being welded to the support 5 so as to extend from one side thereof into a tang 7, is passed.

The supporting framework 3 of the armrest 2 is bonded to the framework 1 of the backrest S by an anchor plate 8 having a tubular sleeve 9 associated therewith in a manner to be explained, said sleeve being adapted for coupling to the tang 7 so that the sleeve and tang will constitute first and second members, respectively, of a joint releasably linking the armrest 2 to the backrest.

The sleeve 9 is spanned by an axial cut at which there are formed two drilled ears 11a,b whereby the sleeve can be clamped to the tang 7 using a thoroughgoing setscrew 12. It is also contemplated that the sleeve 9 may be fastened to the tang 7 in some other ways, e.g. by pinning, riveting or the like. Notice that the screw 12 and sleeve 9 are located within easy reach for assembling and disassembling the armrest to/from the backrest S, on the corresponding side to the plate 8, thereby making the provision of further access ways through the armrest padding unnecessary.

Said sleeve 9 is connected pivotally to the plate 8 by a pintle having an axis X and consisting of a screw 10 engaged, through an interposed bush 15, rotatably in a hole 16 in the plate and threadably in a threaded hole 13 provided at an axial location in a nut 17, in turn welded to the sleeve 9 end facing the plate 8. Provided between the sleeve 9 and the plate 8 is a friction device including two friction discs 18a,b and two corresponding pressure rings 19, 20.

The pressure ring 19 is welded to the sleeve 9 in overlapping relationship with the nut 17 and carries a lug 21 extending from a peripheral location along a parallel direction to the axis X. The possible use of two such lugs, at diametrically opposite locations on the ring 19, is also contemplated. Provided in the plate 8, for each lug 21, is a corresponding curved through-slot 22 centred about the axis X. The lug 21 extends through the slot 22 and out from the opposite side of the plate 8 to define, in combination with said slot, a limiter means for limiting the swing arc of the armrest about the axis X.

The pressure ring 20 is formed peripherally with recesses 23 which correspond, both in number and layout, to the lugs 21 whereto they are coupled to lock the two rings 19, 20 together rotationally about the axis X.

Each friction disc has, on the axially opposite surfaces 25a,b, respective ribs 24 which extend radially at pitch distances. Notice that the ribs 24 are offset angularly across the respective surfaces 25a,b such that the discs, made preferably of a resilient plastics material such as nylon, tetrafluoroethylene, or the like, will undergo a slight elastic deformation when clamped between the rings 19, 20. The amount of this deformation, on which the amount of friction developed by the friction device depends, is controlled by the screw 10 torque. This torque, and the attendant elastic preload on the friction discs 18a,b, can be determined univocally by selecting the axial dimension and outside diameter of the bush 15 such that the latter will abut against and be compressed between the rings 19, 20.

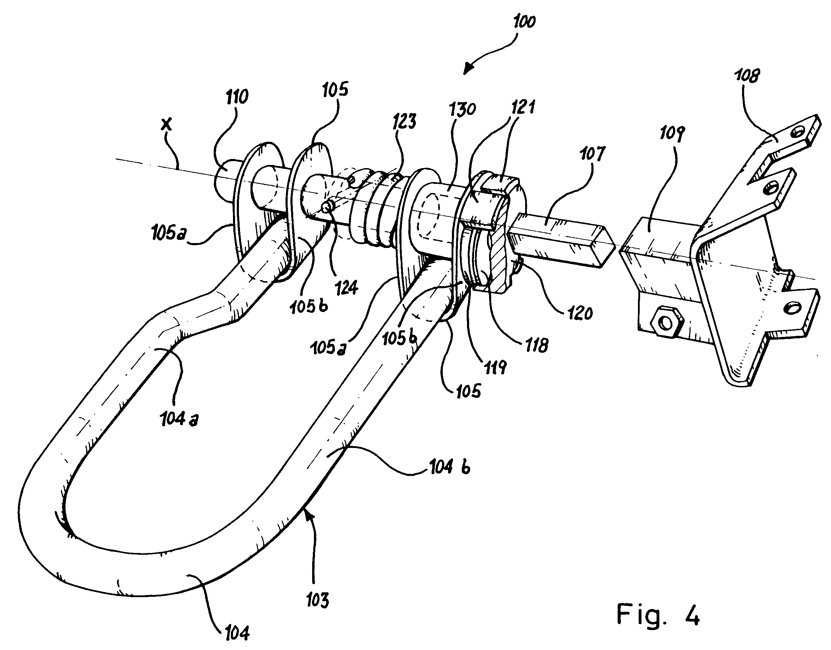

Shown in Figure 4 is a first variation of the armrest structure of this invention as generally indicated at 100. The structure 100 comprises a supporting framework 103 including a tubular reinforcement 104 with asymmetrical legs 104a,b. Welded to the free end of each leg is a respective U-shaped bracket 105 having wings 105a,b drilled along a common axis X and pivotally accommodating a pintle 110 therein. The combined brackets 105 and pintle 110 are here the equivalent of the support 5 of the previous embodiment, and provide means for pivotally connecting the framework 103 to an anchor plate 108 equivalent to the plate 8 of the previous embodiment.

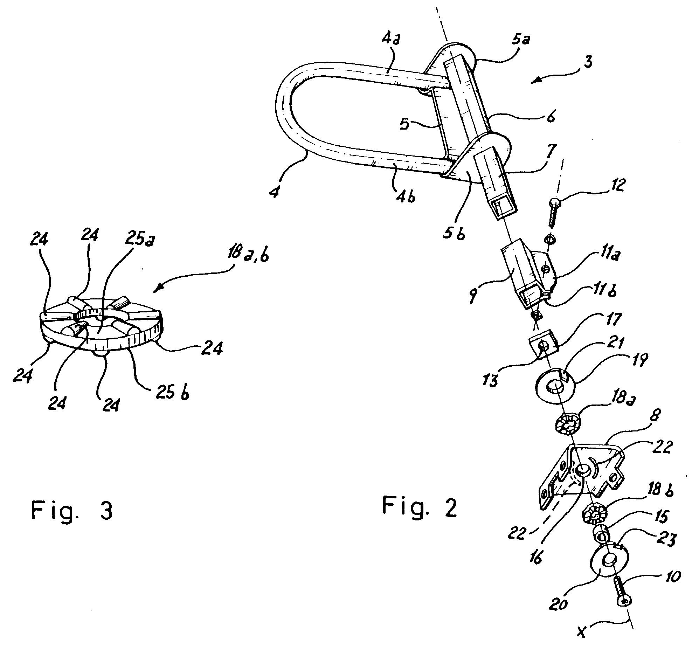

A friction disc 118 has either flat or embossed surfaces as in the previous example (Figure 3) and is interposed to two pressure rings 119, 120 made respectively rigid with the wing 105b of the bracket 105 lying closer to the plate 108 and with an intermediate section of the pintle 110 where the latter changes in cross-section from a circular shape, around which the brackets 105 are journalled, to a polygonal shape, here a square one at a tang 107. The pressure rings 119, 120 are urged against each other and the corresponding disc 118 by the elastic bias force of a coil spring 123 fitted over the pintle 110 at a location between the brackets 105 and compressed between the wing 105a of the closer bracket to the plate 108 and a pin 124 driven into the pintle 110. A tubular spacer 130 is welded in between the two wings of that bracket 105 to prevent deformation of the bracket under load.

Both pressure rings 119, 120 are provided with lugs 121 acting as limiters for the swing movement of the framework 103 about the axis X.

Attached to the plate 108 is a tubular sleeve 109 adapted to be clamped down, similar to the sleeve 9 of the previous embodiment, around the tang 107.

In either of the examples described, the plate 8, 108 is bonded to the backrest framework of a motor vehicle seat to make the latter ready for assembling the armrest thereto.

The armrest 2, complete with the supporting framework 3, 103 and the padding associated therewith, is then mounted by fitting the tang 7, 107 inside the sleeve 9, 109 and then tightening the fastening arrangement by clamping down the sleeve with the screw clamp so as to secure the framework 3, 103 to the plate 8, 108 while leaving it free to swing relative to it about the axis X.

This swinging movement is braked by the friction device and limited by the lugs 121 interfering with the detents suitably provided on the plate.

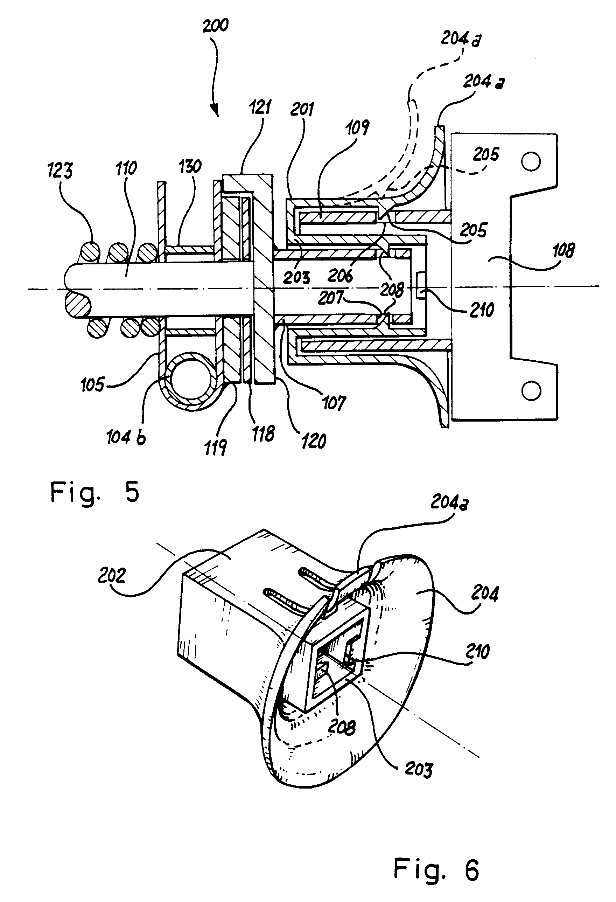

Shown in Figures 5 and 6 is a second variation of the armrest structure according to the invention, generally indicated at 200. The structure 200 is substantially similar to that (structure 100) of the previously described example, and corresponding parts are denoted by the same reference numerals.

As against the structure 100, between the first and second joint members consisting of the tang 107 and the tubular sleeve 109, respectively, there is a bush 201 acting as a bonding means and including two tubular portions 202 and 203 which are coaxial with and bonded to each other, of which portions the outermost one 202 is flared at one end into a flange 204. This bush also acts as a trim element for the armrest at the location of the anchor region of the plate 108.

The portion 202 is spanned by two axial cuts which define a spring-loaded tab 204a thereon having, on its surface confronting the portion 203, a tooth-like formation 205. Said portion 202 forms a mating fit over the tubular sleeve 109, in turn formed with a tooth 205 receiving recess 206, thereby providing a releasable snap type of engagement between the bush 201 and the sleeve 109.

Likewise, the tubular portion 203 forms a mating fit over the tang 107, in turn formed with recesses 207 into which corresponding teeth 208 on the portion 203 will snap. It follows that, once fitted over the tang 107, the bush 201 will snap into engagement while also allowing the aforesaid subsequent snap action onto the sleeve 109. Provided on the axial end of the tubular portion 203 facing the flange 204 are stops 210 against which the free end of the tang 107 abuts once the tang has been snap-engaged with the bush 201.

The whole armrest assembling operation can be carried out from a single access end, i.e. that corresponding to the plate 8, 108.

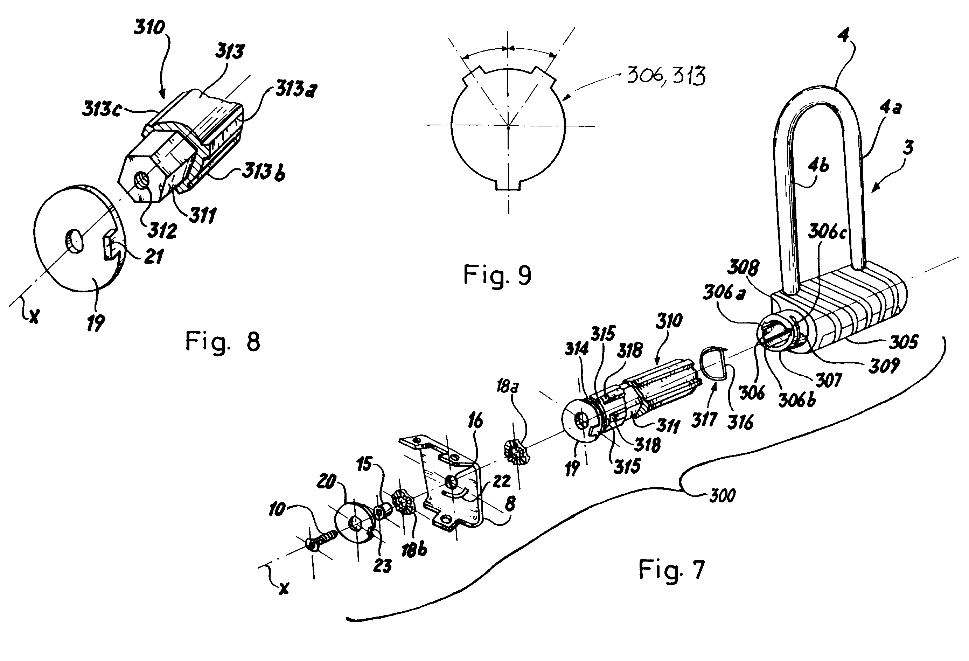

Figure 7 shows a third variation of the invention, generally indicated at 300. This variation is quite similar to the armrest structure of the first example discussed with reference to Figures 1 to 3. Similar parts carry, therefore, the same reference numerals as in that example. The differences lie, inter alia, in that the free ends of the two legs 4a,b of the reinforcement 4 are embedded in a plastics holder 305. The bond between the reinforcement 4 and the holder 305 may be obtained, for example, by encapsulating the ends of the legs 4a,b during the holder moulding process. In addition, the holder 305 has a splined axial bore 306 surrounded, on the side toward the plate 8, by a collar 307 having a cylindrical outer skirt 308. That collar 307 has a slit 309 which extends circumferentially across a section of its skirt 308 and through it.

The holder 305, with the bore 306 and the collar 307, forms a female element, equivalent in function to the tang 7 of the first embodiment of the invention, of a joint which further comprises a male element 310 being a functional substitute for the sleeve 9 of said first embodiment.

This male element 310 comprises a metal shaft 311 having a preferably polygonal cross-sectional shape, which is bored axially, on its side toward the plate 8, by a threaded hole 312 forming a threading socket for the screw 10. The shaft 311 carries the pressure ring 19, locked rotationally thereto as by welding it to the same end of the hole 312. Said shaft 311 has on its exterior a splined covering 313 which may be incorporated by moulding it in. The layout of the ribs 313a,b,c of the splined covering 313 matches the layout of the corresponding splines 306a,b,c in the bore 306, and is preferably such as to provide a univocal relative angular position whereat that shaft can be inserted into the bore. An example of this layout of the ribs on the covering 313, or of the corresponding flutes in the bore 306, is shown schematically in Figure 9.

The covering 313 has, on the axial end next to the pressure ring 19, a cylindrical section in which a groove 314 is formed. Bevels 315 are formed on the wall of said groove 314 lying closest to the flutes 313a,b,c. The groove 314 is engaged, with the structure 300 in the assembled condition, by a straight leg 316 of a spring 317 fitted over the skirt of the collar 307 such that the leg 316 will fit into the slit 309. The spring 317 functions, therefore, as a means of axially bonding the two joint elements together. The bevels 315 are intended to allow the leg 316 of the spring 317 to be disengaged from the groove 314 by applying a strong pull force directed to move the armrest away from the seat plate 8. The spring can be further spread elastically, when the joint elements are to be separated, by virtue of bevels 318 provided on the ends of the ribs 313a,b,c.

Thus, the structure is made simple, strong, substantially non-rattling, and economical to manufacture.

Where the reinforcement is a symmetrical configuration, it is found that it allows of different settings relative to the holder at the assembly stage of the supporting framework, thus being suitable for the fabrication of armrests in a range of different types.

## Claims

1. A swing-up armrest structure for motor vehicle seats, comprising:
a supporting framework (3,103) embedded in the armrest padding;
an anchor plate (8,108) adapted to be fixed to a seat for mounting the framework to the seat (S); and
pivotal connection means between the plate and the framework for a limited swinging movement of the armrest relative to the plate;
a joint interposed between said framework and said anchor plate, said joint including first and second members (7, 9; 107, 109; 107, 201; 305; 310) releaseably coupe able to each other and respectively attached to the plate and to the framework;
fastening means (11a, b, 12; 204a, 317) on said joint for fastening said joint members to each other, characterized in that said fastening means are accessible for fastening and releasing said joint members to each other from the armrest side facing said plate.

2. An armrest structure according to Claim 1, wherein said pivotal connection means comprise a friction device (18a,b,19,20;118,119,120) acting between at least one of said joint members (7,9;107,109;107,201;305,310) and the corresponding plate (8,108) or framework (3,103) whereto it is bonded.

3. An armrest structure according to Claim 2, wherein said plate (8) and the first joint member (9,310) are connected pivotally together into said pivotal connection by a pintle (10), and wherein said friction device comprises at least one friction disc (18a,b) compressed between said plate (8) and a pressure member (19,20) associated with said first joint member.

4. An armrest structure according to Claim 3, wherein said friction device comprises at least two friction discs compressed between opposite surfaces of the plate and respective pressure members associated with the first joint member, said pressure members being provided with respective entrainment means (21) and counter-means (23) extending through corresponding openings (22) in the plate (8), whereby they are locked rotationally.

5. An armrest structure according to Claim 4, wherein the entrainment means (21) define, with the corresponding opening (22) in the plate (8), corresponding travel limiters for limiting the swinging movement of the armrest relative to the plate.

6. An armrest structure according to Claim 3, wherein the friction discs (18a,b) have discontinuous friction surfaces.

7. An armrest structure according to Claim 6, wherein the friction surfaces of the discs are spanned by respective pluralities of ribs (24) angularly offset on the opposite surfaces (25a,b).

8. An armrest structure according to one or more of the preceding claims, wherein the first and second joint members respectively comprise a tubular sleeve (9) and a tang (7) whereon said sleeve is clamped down releasably.

9. An armrest structure according to one or more of the preceding claims, wherein the framework includes a reinforcement (4) having a symmetrical configuration.

10. An armrest structure according to one or more of the preceding claims, wherein one of the joint members comprises a splined bore (306) formed in a holder (305) of said framework, the other joint member comprises a splined shaft (310) forming a mating fit within said splined bore, an elastically deformable element (316) being mounted on said holder so as to extend into said splined bore and releasably engage in a groove (314) formed on said shaft (310), thereby bonding said shaft and said holder axially together.

11. An armrest structure according to Claim 10, wherein said holder (305) is made of a plastics material and the axial ends of two legs (4a,b) of a reinforcement for said supporting tramework (3) are embedded therein.

12. An armrest structure according to Claim 10, wherein the splines (313a,b,c;306a,b,c) on said shaft and said bore are mutually oriented to provide a univocal relative angular position between said joint members.

13. An armrest structure according to Claim 2, wherein the first joint member (109) is rigid with said plate (108) and the second joint member (107) is mounted on the supporting framework in a limited pivotal manner relative to a reinforcement (104) thereof with the friction device (118-120) interposed.

14. An armrest structure according to one or more of the preceding claims, wherein the first and second joint members respectively comprise a tubular sleeve and a tang (109,107), said fastening means including a bush (201) made rigid with one of said sleeve and tang and being releasably coupled to the other by snap engagement therewith.

## Patentansprüche

1. Schwenkarmlehnenmechanismus für Kraftfahrzeugsitze, mit
- einem in der Armlehnenpolsterung eingebetteten Tragrahmen (3, 103),
- einer an einem Sitz befestigbaren Verankerungsplatte (8, 108) zur Montage des Rahmens an diesem Sitz (S),
- einer zwischen der Platte und dem Rahmen vorgesehenen Schwerkverbindung für eine begrenzte Schwenkbewegung der Armlehne in bezug auf die Platte,
- einer zwischen dem Rahmen und der Verankerungsplatte angeordneten Verbindung, die ein erstes und ein zweites Element (7, 9; 107, 109; 107, 201; 305, 310) umfaßt, die lösbar miteinander verbunden werden können und an der Platte bzw. am Rahmen angebracht sind,
- an dieser Verbindung vorgesehenen Befestigungsmitteln (11a, 11b, 12; 204a, 317) zum Aneinanderbefestigen der Verbindungselemente,
dadurch gekennzeichnet,
daß zum Aneinanderbefestigen und Lösen der Verbindungselemente diese Befestigungsmittel von der Seite der Armlehne zugänglich sind, die der Platte zugewandt ist.

2. Armlehnenmechanismus nach Anspruch 1, bei dem die Schwenkverbindung eine Reibungseinrichtung (18a, 18b, 19, 20; 118, 119, 120) umfaßt, die zwischen mindestens einem der Verbindungselemente (7, 9; 107, 109; 107, 201; 305, 310) und der zugehörigen Platte (8, 108) oder dem Rahmen (3, 103), an dem sie befestigt ist, zur Wirkung gelangt.

3. Armlehnenmechanismus nach Anspruch 2, bei dem Schwenkverbindung zwischen der Platte (8) und dem ersten Verbindungselement (9, 310) mittels eines Schraubenbolzens (10) hergestellt wird und die Reibungseinrichtung mindestens eine Reibscheibe (18a, 18b) umfaßt, die zwischen der Platte (8) und einem mit dem ersten Verbindungselement verbundenen Druckelement (19, 20) sitzt.

4. Armlehnenmechanismus nach Anspruch 3, bei dem die Reibungseinrichtung mindestens zwei Reibscheiben umfaßt, die zwischen den gegenüberliegenden Seiten der Platte und den zugehörigen, mit dem ersten Verbindungselement verbundenen Druckelementen sitzen, wobei diese Druckelemente mit durch Öffnungen (22) der Platte (8) ragenden Mitnehmern (21) bzw. Aussparungen (23) versehen und somit drehbar miteinander verbunden sind.

5. Armlehnenmechanismus nach Anspruch 4, bei dem die Mitnehmer (21) zusammen mit der zugehörigen Öffnung (22) der Platte (8) Wegbegrenzer zur Einschränkung der Schwenkbewegung der Armlehne in bezug auf die Platte bilden.

6. Armlehnenmechanismus nach Anspruch 3, bei dem die Reibscheiben (18a, 18b) unterbrochene Reibflächen aufweisen.

7. Armlehnenmechanismus nach Anspruch 6, bei dem die Reibflächen der Reibscheiben mehrere radiale Rippen (24) aufweisen, wobei die Rippen (24) auf der einen Fläche (25a) gegen diejenigen auf der anderen Fläche (25b) winkelversetzt sind.

8. Armlehnenmechanismus nach einem oder mehreren der vorhergehenden Ansprüche, bei dem die beiden Verbindungselemente eine hohle Manschette (9) und einen Zapfen (7), auf dem diese Manschette lösbar festgeklemmt wird, umfassen.

9. Armlehnenmechanismus nach einem oder mehreren der vorhergehenden Ansprüche, bei dem der Rahmen eine symmetrisch geformte Verstärkung (4) umfaßt.

10. Armlehnenmechanismus nach einem oder mehreren der vorhergehenden Ansprüche, bei dem eines der beiden Verbindungselemente eine Bohrung (306) mit Keilnuten, die in einer Halterung (305) des Rahmens gebildet ist, und das andere Verbindungselement einen genau in diese Bohrung passenden Schaft (310) mit Keilnuten umfaßt, wobei auf der Halterung ein elastisch verformbares Element (316) so angebracht ist, daß es in die Bohrung ragt und lösbar in eine am Schaft (310) gebildete Nut (314) eingreift und somit den Schaft und die Halterung in Axialrichtung zusammenhält.

11. Armlehnenmechanismus nach Anspruch 10, bei dem die Halterung (305) aus einem Kunststoff hergestellt ist, in dem die axialen Enden von zwei Schenkeln (4a, 4b) der Verstärkung für den Tragrahmen (3) eingebettet sind.

12. Armlehnenmechanismus nach Anspruch 10, bei dem die Keilnuten (313a, 313b, 313c; 306a, 306b, 306c) des Schafts und der Bohrung so aufeinander ausgerichtet sind, daß die Verbindungselemente zueinander eine eindeutige Winkellage einnehmen.

13. Armlehnenmechanismus nach Anspruch 2, bei dem das erste Verbindungselement (109) mit der Platte (108) starr verbunden ist und das zweite Verbindungselement (107) am Tragrahmen so angebracht ist, daß es in bezug auf dessen Verstärkung (104) eine eingeschränkte Schwenkbewegung ausführen kann, wobei die Reibungseinrichtung (118 bis 120) dazwischen angeordnet ist.

14. Armlehnenmechanismus nach einem oder mehreren der vorhergehenden Ansprüche, bei dem die beiden Verbindungselemente eine hohle Manschette und einen Zapfen (109, 107) umfassen, wobei die Befestigungsmittel eine Buchse (201) umfassen, die mit der Manschette starr und mit dem Zapfen durch eine Schnappverbindung lösbar verbunden ist oder umgekehrt.

## Revendications

1. Structure d'accoudoir basculant destinée à des sièges de véhicule à moteur, comprenant :
un bâti de support (3, 103) enrobé dans un garnissage d'accoudoir,
une plaque d'ancrage (8, 108) destinée à être fixée à un siège pour le montage du bâti sur le siège (S), et
un dispositif de connexion pivotante entre la plaque et le bâti permettant un mouvement de basculement limité de l'accoudoir par rapport à la plaque,
un joint placé entre le bâti et la plaque d'ancrage, le joint ayant un premier et un second organe (7, 9 ; 107, 109 ; 107, 201 ; 305, 310) qui peuvent être couplés temporairement l'un à l'autre et fixés respectivement à la plaque et au bâti, et
un dispositif de fixation (11a, b, 12 ; 204a, 317) placé sur le joint et destiné à fixer les organes du joint l'un à l'autre, caractérisé en ce que le dispositif de fixation est accessible pour la fixation l'un à l'autre et la libération des organes du joint du côté de l'accoudoir tourné vers la plaque.

2. Structure d'accoudoir selon la revendication 1, dans laquelle le dispositif de connexion pivotante comprend un dispositif de friction (18a, b, 19, 20 ; 118, 119, 120) agissant entre l'un au moins des organes de joint (7, 9 ; 107, 109 ; 107, 201 ; 305, 310) et la plaque correspondante (8, 108) ou le bâti correspondant (3, 103) auquel il est fixé.

3. Structure d'accoudoir selon la revendication 2, dans laquelle la plaque (8) et le premier organe de joint (9, 310) sont connectés de manière pivotante l'un à l'autre par une connexion pivotante par un pivot central (10), et le dispositif de friction comprend au moins un disque de friction (18a, b) comprimé entre la plaque (8) et un organe de pression (19, 20) associé au premier organe de joint.

4. Structure d'accoudoir selon la revendication 3, dans laquelle le dispositif de friction comprend au moins deux disques de friction comprimés entre des surfaces opposées de la plaque et d'organes respectifs de pression associés au premier organe de joint, les organes de pression ayant des dispositifs respectifs d'entraînement (21) et des dispositifs auxiliaires (23) passant dans les ouvertures correspondantes (22) de la plaque (8), si bien qu'ils sont bloqués en rotation.

5. Structure d'accoudoir selon la revendication 4, dans laquelle le dispositif d'entraînement (21) délimite, avec l'ouverture correspondante (22) dans la plaque (8), des organes limiteurs de course correspondants destinés à limiter le mouvement de basculement de l'accoudoir par rapport à la plaque.

6. Structure d'accoudoir selon la revendication 3, dans laquelle les disques de friction (18a, b) ont des surfaces discontinues de friction.

7. Structure d'accoudoir selon la revendication 6, dans laquelle les surfaces de friction des disques sont couvertes par plusieurs nervures respectives (24) décalées angulairement sur les surfaces opposées (25a, b).

8. Structure d'accoudoir selon l'une ou plusieurs des revendications précédentes, dans laquelle le premier et le second organe de joint comportent respectivement un manchon tubulaire (9) et une patte (7) sur laquelle le manchon est serré de façon amovible.

9. Structure d'accoudoir selon une ou plusieurs des revendications précédentes, dans laquelle le bâti comprend un renforcement (4) de configuration symétrique.

10. Structure d'accoudoir selon une ou plusieurs des revendications précédentes, dans laquelle l'un des organes de joint comprend un trou cannelé (306) formé dans un support (305) du bâti, l'autre organe de joint comprend un arbre cannelé (310) coopérant avec le trou cannelé, un élément élastiquement déformable (316) étant monté sur le support afin qu'il pénètre dans le trou cannelé et coopère temporairement avec une gorge (314) formée sur l'arbre (310) si bien que l'arbre et le support sont fixés axialement l'un à l'autre.

11. Structure d'accoudoir selon la revendication 10, dans laquelle le support (305) est formé de matière plastique et les extrémités axiales des deux branches (4b, b) d'un renfort du bâti de support (3) sont enrobées dans le support.

12. Structure d'accoudoir selon la revendication 10, dans laquelle les cannelures (313a, b, c ; 306a, b, c) de l'arbre et du trou ont une orientation donnant une position angulaire relative unique entre les organes de joint.

13. Structure d'accoudoir selon la revendication 2, dans laquelle le premier organe de joint (109) est fixé rigidement à la plaque (108) et le second organe de joint (107) est monté sur le bâti de support avec un mouvement pivotant limité par rapport à un renfort (104) de ce bâti, le dispositif de friction (118-120) étant placé entre eux.

14. Structure d'accoudoir selon une ou plusieurs des revendications précédentes, dans laquelle le premier et le second organe de joint sont respectivement un manchon tubulaire et une patte (109, 107), le dispositif de fixation comprenant une douille (201) rendue solidaire du manchon ou de la patte et couplée de façon amovible à la patte ou au manchon respectivement par enclenchement élastique.
